# EUROPÄISCHE PATENTSCHRIFT

(11) **EP 0 745 462 B1**
(45) Veröffentlichungstag und Bekanntmachung des Hinweises auf die Patenterteilung: **18.10.2000**
(21) Anmeldenummer: 96108297.1
(22) Anmeldetag: 24.05.1996
(51) Int. Cl.: B26D 1/45, B26D 3/16, B26D 1/28

(54) **Vorrichtung zum Ablängen oder Schlitzen von kontinuierlich bewegtem, strangförmigem Material**
Device for the cutting into lengths or slotting of continuously moving elongated material
Dispositif de coupe en longueur ou rainurage de matériau allongé en défilement continu

(30) Priorität: 01.06.1995 DE 19520161
(43) Veröffentlichungstag der Anmeldung: 04.12.1996
(73) Patentinhaber: BELLAFORM EXTRUSIONSTECHNIK GMBH, 55218 Ingelheim (DE)
(72) Erfinder: Merz, Ulrich, 55239 Gau-Oppenheim (DE)
(74) Vertreter: Fuchs Mehler Weiss & Fritzsche

(56) Entgegenhaltungen:
- US-A- 3 151 514
- US-A- 3 724 306
- US-A- 3 831 469
- US-A- 4 218 944
- US-A- 4 941 378
- DATABASE WPI Section PQ, Week 7918 Derwent Publications Ltd., London, GB; Class P54, AN 79-E0175B XP002029634 & SU 612 755 A (ZHDANOV METAL INST) , 19.Juni 1978

## Beschreibung

Die Erfindung betrifft eine Vorrichtung zum Ablängen oder Schlitzen von kontinuierlich bewegtem, strangförmigem Material gemäß dem Oberbegriff des Anspruchs 1.

Eine Vielzahl von stabförmigen Produkten, wie Zigaretten, Trinkhalme oder Kunststoffprofile wird aus strangförmigem Material gefertigt, das entsprechend abgelängt werden muß. Da strangförmiges Material in der Regel kontinuierlich produziert wird, wie z.B. Kunststoffprofile, die aus einem Extruder austreten, sind schnellaufende Schneidmaschinen erforderlich, damit das strangförmige Material während des Schneidvorgangs nicht angehalten werden muß. Je nach Art des zu schneidenden Materials und der Vorschubgeschwindigkeit des Stranges ist eine entsprechend hohe Messergeschwindigkeit erforderlich. Oft ist es notwendig, auch unterschiedlich lange Abschnitte von dem strangförmigen Material abzutrennen, ohne daß die Vorschubgeschwindigkeit des Stranges hierzu geändert und an die Schnittgeschwindigkeit des Schneidwerkzeuges angepaßt werden muß. Bekannte Schneidvorrichtungen erfüllen diese Anforderungen nur ungenügend.

Aus der US 4 941 378 - A ist eine Vorrichtung gemäß dem Oberbegriff des Anspruchs 1 bekannt.

Aus der DE 3222433 A1 ist eine Vorrichtung zum Schneiden von pflanzlichen Stoffen, insbesondere Tabak, mit einer trichterförmigen Preßlade bekannt, in der das eingeschüttete Schneidgut verdichtet und einem an der Austrittsseite der Preßlade befindlichen Mundstück zugeführt wird. Die Vorrichtung sieht einen um eine waagrechte Achse vor dem Mundstück rotierenden Messerträger mit umlaufenden Messern vor, die am Mundstück schneidend vorbeigeführt werden. Ferner ist eine in der Umlaufbahn der Messer angeordnete Messerschleifeinrichtung vorgesehen. Die Messer sind im Messerträger beweglich angeordnet, um die Messer während ihres von der Rotation des Messerträgers bewirkten Umlaufs auf der Umlaufbahn annähernd in gleicher Stellung zu halten. Dies bedeutet, daß die Messer während des Umlaufs zueinander nahezu parallel stehen.

Aus der DE-AS 1134821 ist eine Vorrichtung zum Abtrennen von Abschnitten eines strangförmigen Kunststoffkörpers bekannt, bei der das Messer auf einer angetriebenen rotierenden Welle befestigt ist, die während eines Umlaufs abgebremst und beschleunigt wird. Die Beschleunigung ist dazu erforderlich, damit das Messer beim Durchtrennen des Profilstranges eine entsprechend hohe Geschwindigkeit aufweist. Die Abbremsung hingegen ist notwendig, damit die Schnittfolge nicht zu hoch ist und die abgelängten Abschnitte des Profilstranges nicht zu kurz werden. Über die einstellbare Abbremsung der Welle kann somit die Schnittlänge eingestellt werden. Hierfür ist jedoch einerseits eine äußerst aufwendige elektrische und mechanische Steuerung notwendig und andererseits ist wegen der Beschleunigung und Abbremsung der Welle bzw. des Messers der Energieverbrauch und der Verschleiß der Vorrichtung sehr groß.

Die DE 3041705 A1 beschreibt eine Trennvorrichtung, bei der zwischen einer drehbar auf der Weile gelagerten Lastscheibe des Riementriebs der Trennvorrichtung und dem auf der Welle fest angeordneten Trennmesser eine mit der Lastscheibe verbundene, elektromagnetisch schaltbare Spezialkupplung angeordnet ist. Die Spezialkupplung wirkt mit einer elektronischen Längenmeßeinrichtung zusammen, die an eine den Transport des strangförmigen Gutes bewirkenden Transportvorrichtung angeordnet ist und die durch einen Impuls die Spezialkupplung zwecks Drehens des Trennmessers um einen vorbestimmbaren Winkelbetrag schaltet. Diese Trennvorrichtung stellt sich automatisch auf die jeweilige Geschwindigkeit, mit der das strangförmige Gut der Trennvorrichtung zugeführt wird, ein, wodurch bei Änderung der Vorschubgeschwindigkeit des strangförmigen Gutes von diesem ununterbrochen Abschnitte gleicher Länge abgetrennt werden können. Der Nachteil dieser Vorrichtung besteht darin, daß die Spezialkupplung einem erheblichen Verschleiß unterworfen ist.

In G 1839632 wird eine Abzugs- und Kalibriervorrichtung für Kunststoffprofile beschrieben, die zum Ablängen eine Säge aufweist. Die Säge ist sowohl in Vorschubrichtung des Profils und zurück verschiebbar als auch quer dazu verschwenkbar angeordnet, um eine kontinuierliche Arbeitsweise der gesamten Anlage nicht zu behindern. Nachteilig ist hierbei, daß die Säge während des Trennvorgangs mit der gleichen Geschwindigkeit wie der Profilstrang bewegt werden muß.

Eine demgegenüber verbesserte Vorrichtung ist in der gattungsbildenden DE-OS 2530177 beschrieben, bei der das Sägeblatt exzentrisch auf einer ebenfalls rotierenden Trägerscheibe angeordnet ist. Durch die Überlagerung der beiden Rotationsgeschwindigkeiten ist die Verweildauer des Sägeblatts beim Durchtrennen des Profils sehr kurz, so daß die Säge nicht in Vorschubrichtung des Profilstranges mitbewegt werden muß. Der Nachteil dieser Vorrichtung besteht allerdings darin, daß das Sägeblatt eine eigene Antriebseinrichtung benötigt, die mitbewegt werden muß, was wiederum zu einer erheblichen Unwucht der Trägerscheibe führt, die durch Gegengewichte kompensiert werden muß. Die Schnittzahl hängt von der Umdrehungsgeschwindigkeit der Trägerscheibe ab, die hierzu entsprechend geregelt werden muß.

Aufgabe der Erfindung ist eine bessere Belastungsverteilung und die weitgehende Unterdrückung von Geräuschen.

Diese Aufgabe wird mit einer Vorrichtung gemäß Anspruch 1 gelöst.

Die Überlagerung der Rotationsgeschwindigkeit des Trägerelementes mit der Rotationsgeschwindigkeit des Messerhalters führt zu einer hohen Schnittgeschwindigkeit, so daß die Trennvorrichtung beim Ablängen oder Schlitzen des kontinuierlich bewegten strangförmigen Materials nicht mitbewegt werden muß. Die Schnittgeschwindigkeit kann somit sowohl über die Rotationsgeschwindigkeit des Trägerelementes als auch über die Rotationsgeschwindigkeit des Messerhalters eingestellt werden.

Dadurch, daß die erfindungsgemäße Anordnung des Messers eine Epizykloide beschreibt, wird in einer Grundeinstellung zunächst einer der Scheitelpunkte der Epizykloide in den Bereich des abzulängenden oder zu schlitzenden strangförmigen Materials gelegt. Da es sich um eine geschlossene Epizykloide handelt, ist dieser Scheitelpunkt ortsfest und wird bei jeder Umdrehung des Trägerelementes vom Messer einmal durchlaufen. Dies bedeutet, daß bei jeder Umdrehung des Trägerelementes auch ein Schnitt durchgeführt wird. Wenn nun längere Abschnitte von dem strangförmigen Material abgetrennt werden sollen, wird über die am Messerhalter angreifende Verstelleinrichtung eine Verschiebung der Epizykloide um einen vorgegebenen Winkel durchgeführt, so daß sich keiner der Scheitelpunkte der Epizykoide im Bereich des strangförmigen Materials befindet. Vorzugsweise wird die Epizykloide so weit verdreht, daß sich das Messer im Bereich des strangförmigen Profils in einem Rückkehrpunkt der Epizykloide befindet. Dies bedeutet, daß in diesem Fall das Schneidmesser sich in einer Position befindet, in der es radial nach innen auf die Rotationsachse des Trägerelementes weist.

Vorzugsweise ist der Durchmesser der Trägerscheibe ≥ dem Durchmesser der Messerscheibe.

Die Verstelleinrichtung weist eine benachbart und koaxial zur Trägerscheibe angeordnete Stellscheibe auf, um die die Messerscheibe umläuft, wobei die Stellscheibe mittels einer an ihr angreifenden Verdreheinrichtung um ihre Achse zwischen zwei Ruhepositionen schwenkbar ist.

Die Messerscheibe und die Stellscheibe sind als Zahnriemenscheiben ausgebildet. Beabstandet zur Messerscheibe ist eine Umlenkscheibe drehbar auf der Trägerscheibe angeordnet. Trägerscheibe und Umlenkscheibe sind vorzugsweise auf einem gemeinsamen Kreis auf der Trägerscheibe angeordnet. Die Durchmesser beider Scheiben sind vorzugsweise gleich groß. Die Messerscheibe und die Umlenkscheibe sind von einem Zahnriemen umschlungen, der im Bereich zwischen der Messerscheibe und der Umlenkscheibe an der Stellscheibe anliegt. Aufgrund der Rotation der Trägerscheibe rollt der Zahnriemen auf der Stellscheibe ab, wodurch die Messerscheibe in Rotation versetzt wird. Der Zahnriemen hat den Vorteil, daß die Belastung sich auf mehrere Zähne verteilt und daß er weitgehend geräuschlos abrollt. Anstelle eines Zahnriemens sind alle Kettenbauarten bzw. alle formschlüssigen Zugmitteltriebe einsetzbar. Sowohl bei dieser als auch bei der zuvor beschriebenen Ausführungsform dreht sich die Messerscheibe in der gleichen Richtung wie die Trägerscheibe, so daß sich beim Durchtrennen des strangförmigen Materials beide Rotationsgeschwindigkeiten addieren.

Bei dieser Ausführungsform erfolgt die Verdrehung der Epizykloide mittels der Stellscheibe. Wenn die Verdreheinrichtung der Stellscheibe betätigt wird, erfolgt über den Zahnriemen eine Beschleunigung oder ein Abbremsen bzw. Anhalten der Messerscheibe, so daß das Messer eine andere Position einnimmt, wodurch die Scheitelpunkte der Epizykloide gegenüber ihrer vorherigen Position verdreht sind. Es ist mittels dieser Verstellscheibe auf einfache Weise möglich, einen Scheitelpunkt der Epizykloide in den Bereich des strangförmigen Materials zu verlegen oder aus diesem Bereich herauszunehmen. Mittels einer entsprechenden Steuerung kann immer dann, wenn ein Schnitt durchgeführt werden soll, diese Verdreheinrichtung betätigt werden, die dann die Stellscheibe aus einer ersten in eine zweite Ruheposition verdreht. An die Genauigkeit dieses Impulses und die Verstellung der Stellscheibe brauchen keine hohen Anforderungen gestellt zu werden, da hierfür nahezu eine vollständige Umdrehung der Trägerscheibe zur Verfügung steht.

Vorzugsweise wird die Stellscheibe um einen Winkel von 45° verschwenkt. Welcher Winkel letztendlich notwendig ist, hängt von den Durchmessern von Stellscheibe und Messerscheibe sowie von der Anzahl der Zähne von Messerscheibe und Stellscheibe ab. Vorzugsweise ist das Verhältnis der Zähnezahl der Stellscheibe zur Zähnezahl der Messerscheibe ganzzahlig, weil andernfalls keine geschlossene Epizykloide erzielt werden kann. Beim Verhältnis 1:1 ergibt sich als Sonderfall eine Kardiode. Wenn beispielsweise das Verhältnis der Zähnezahlen 4:1 beträgt, so erhält man eine Epizykloide in Form eines "vierblättrigen Kleeblattes". Je größer das Verhältnis der Zähnezahl ist, desto mehr Scheitel- und Rückkehrpunkte weist die Epizykloide auf. Vorzugsweise liegt das Verhältnis zwischen 10:1 und 2:1. Der Verstellwinkel der Stellscheibe muß dann entsprechend angepaßt sein. Aufgrund des längeren Weges, den das Messer durchläuft, bei gleicher Rotationsgeschwindigkeit der Trägerscheibe ergibt sich mit zunehmendem Zähnezahlverhältnis auch eine höhere Schnittgeschwindigkeit und somit kürzere Rückstauzeiten des zu zerteilenden Profils. Bei höheren Zähnezahlen ist allerdings darauf zu achten, daß sich der Abstand zwischen den Umkehrpunkten verringert, so daß das Messer u.U. bereits im "Leerlauf", in dem nicht geschnitten werden soll, das Profil berührt. In diesem Fall müßten dann die Abmessungen der Vorrichtung, insbesondere die der Trägerscheibe, entsprechend vergrößert werden.

Neben der hohen Schnittgeschwindigkeit durch die Addition der Umfangsgeschwindigkeiten während des Schnittes und somit minimiertem Rückstau des Profils weist die erfindungsgemäße Vorrichtung als weiteren Vorteil auf, daß sehr geringe Längentoleranzen erreicht werden, da die Wiederholgenauigkeit des Schneidimpulses und des Verdrehens der Stellscheibe keinen Einfluß auf das Schneidergebnis haben. Der Einsatzbereich der Vorrichtung ist groß, da jede beliebige Schnittfolge mit der stets gleich hohen Schnittgeschwindigkeit realisiert werden kann. Durch eine kontinuierlich rotierende Schwungmasse erhält man eine große Schnittkraft. Außerdem weist die Vorrichtung keine Verschleißteile wie Kupplung oder Dreheinführungen auf, so daß sich die Vorrichtung auch durch eine lange Lebensdauer auszeichnet.

Beispielhafte Ausführungsformen der Erfindung werden nachfolgend anhand der Zeichnungen näher erläutert.

Es zeigen:
- Figur 1: die Vorrichtung in Seitenansicht,
- Figur 2: die Vorrichtung gemäß Figur 1 in einer weiteren Seitenansicht,
- Figur 3: die in den Figuren 1 und 2 gezeigte Vorrichtung in Draufsicht und
- Figur 4: die graphische Darstellung zweier Epizykloiden I und II entsprechend zweier Stellungen der Stellscheibe.

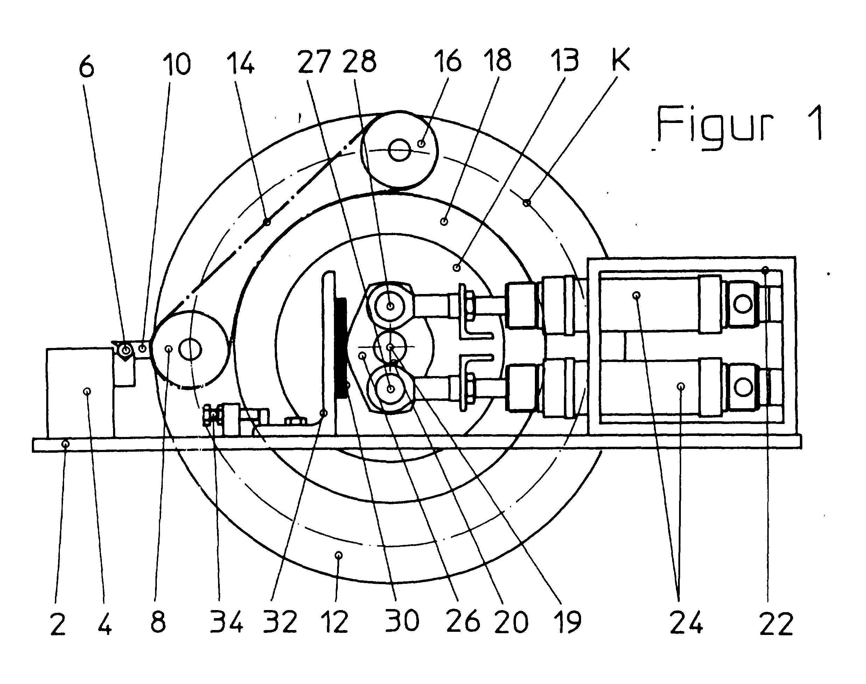

In der Figur 1 ist die Vorrichtung in Seitenansicht dargestellt. Auf einem Rahmen 2 ist im linken Teil der Figur 1 eine Profilführungseinrichtung befestigt, auf der das strangförmige Profil 6 geführt wird.

Auf dem Rahmen 2 ist über nicht dargestellte Halter und Lager eine Trägerscheibe 12 auf einer Welle 20 drehbar gelagert. An der Trägerscheibe 12 ist eine Antriebsscheibe 13 mit kleinerem Durchmesser befestigt, die über einen (nicht dargestellten) Antriebsriemen mit einem ebenfalls nicht dargestellten Antriebsmotor verbunden ist. Auf der Trägerscheibe 12 ist eine Messerscheibe 8 angeordnet, die ein nach außen radial vorstehendes Messer 10 trägt. Die Messerscheibe 8 ist derart drehbar auf der Trägerscheibe 12 gelagert, daß das Messer 10 auch gegenüber der Trägerscheibe 12 radial vorsteht, wenn sich die Messerscheibe 8 in der hier gezeigten Schnittposition befindet.

Beabstandet zur Messerscheibe 8 ist eine Umlenkscheibe 16 ebenfalls drehbar auf der Trägerscheibe 12 gelagert. Die Mittelpunkte von Messerscheibe 8 und Umlenkscheibe 16 befinden sich auf einem gemeinsamen Kreis K, wobei in der hier gezeigten Ausführungsform der Abstand beider Scheiben etwa eine Viertelumdrehung der Trägerscheibe 12 beträgt. Beide Scheiben 8, 16 sind als Zahnriemenscheibe ausgebildet und von einem Zahnriemen 14 umschlungen, der als beidseitiger Zahnriemen ausgebildet ist. Im Bereich zwischen der Messerscheibe 8 und der Umlenkscheibe 16 liegt der Zahnriemen 14 auf einer Stellscheibe 18 an, die ebenfalls als Zahnriemenscheibe ausgebildet ist.

Während die Trägerscheibe 12 drehbar auf der Achse 20 gelagert ist, ist die Stellscheibe 18 drehfest mit der Achse 20 verbunden. Ebenfalls drehfest mit der Achse 20 ist die Stellplatte 26 als Teil einer Verdreheinrichtung 22 verbunden, die in der hier gezeigten Ausführungsform zwei Stellzylinder 24 aufweist. Diese greifen in den Gelenkpunkten 27, 28 an der Stellplatte 26 an und werden zum Verdrehen der Stellscheibe 18 aus einer ersten in eine zweite Ruheposition jeweils gegenläufig bewegt. Um die Stellscheibe 18 um einen vorgegebenen Winkel nach rechts zu verdrehen, wird der obere Stellzylinder 24 eingefahren und der untere Stellzylinder 24 ausgefahren. Um die Stellscheibe 18 wieder in ihre Ausgangsposition zurückzubewegen, werden die Stellzylinder 24 in umgekehrter Weise betätigt. Wenn die Stellscheibe 18 um einen Winkel von 45° um ihre Achse 19 verdreht wird, bewegt sich die Messerscheibe 8 aus der in Figur 1 gezeigten Position um 180°. Dies bedeutet, daß sich das Messer 10 im Bereich des strangförmigen Materials 6 nicht mehr in einem Scheitelpunkt sondern in einem Rückkehrpunkt der Epizykloide befindet. Die Bewegung der Stellscheibe 18 kann zu jedem Zeitpunkt während der Rotation der Trägerscheibe 12 erfolgen.

Um diese ruckartige Bewegung abzufedern, ist auf der den Stellzylindern 24 abgewandten Seite der Stellplatte 26 auf einem Winkeleisen 32 ein Puffer 30 befestigt, an den die Stellscheibe 26 bei Erreichen ihrer jeweiligen Endstellung anschlägt. Die Position des Puffers 30 kann durch eine Stellschraube 34 verschoben werden.

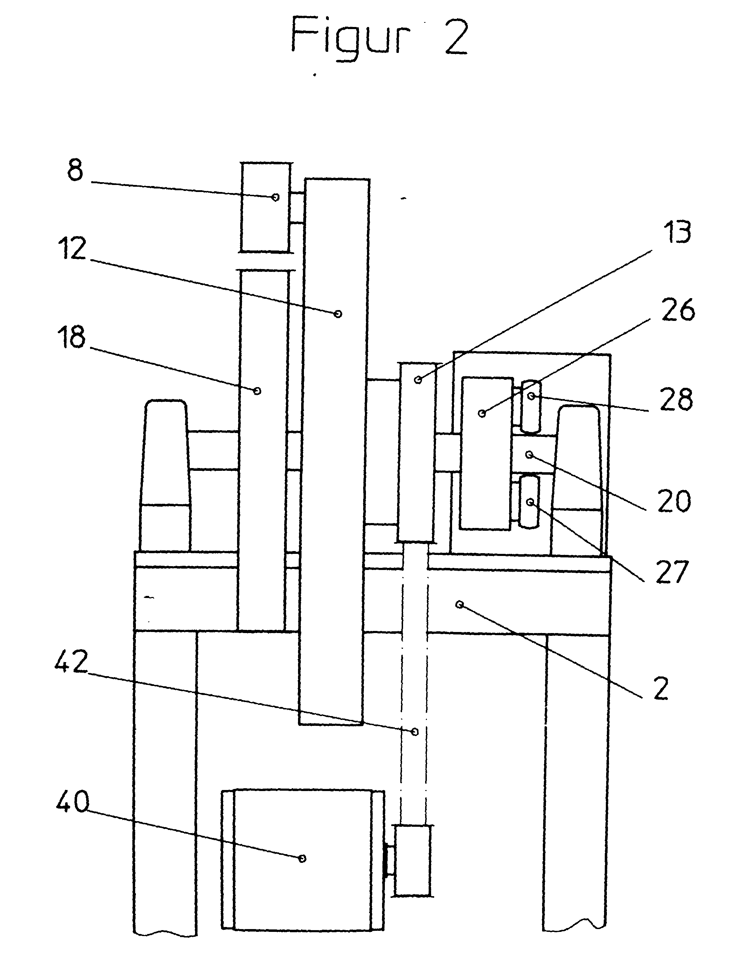

In der Figur 2 ist eine weitere Seitenansicht der Vorrichtung dargestellt. An der Trägerscheibe 12 ist das Antriebsrad 13 angebracht, über das der Antriebsriemen 42 läuft. Unterhalb des Rahmens 2 ist die Antriebseinrichtung 40 in Form eines Antriebsmotors angeordnet, der den Antriebsriemen 42 antreibt.

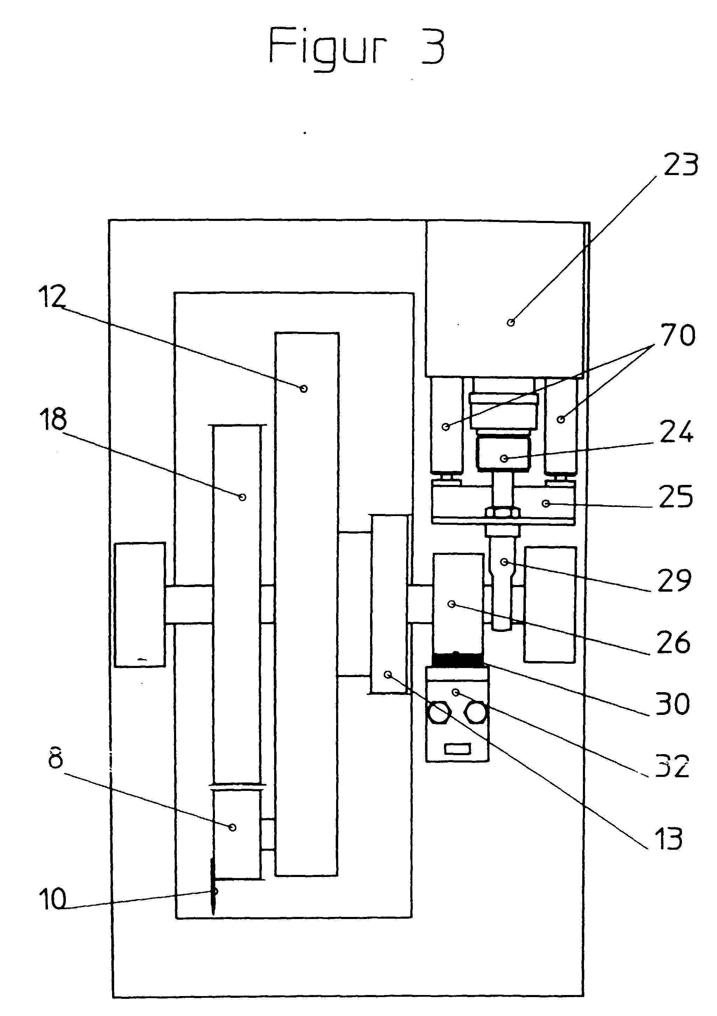

In der Figur 3 ist die Vorrichtung von oben dargestellt. Die Verstellzylinder 24 werden von dem Verdrehantrieb 23 betätigt. Insgesamt sind zwei Verstellzylinder übereinander angeordnet, die wiederum ist über Hebelarm 29 an der Verstellplatte 26 angelenkt sind.

An den beiden übereinander liegenden Winkeln 25 greifen je zwei Stoßdämpfer 70 an, die die Aufgabe haben, das Anschlagen der Stellplatte 26 an den Puffer 30 zusätzlich zu dämpfen.

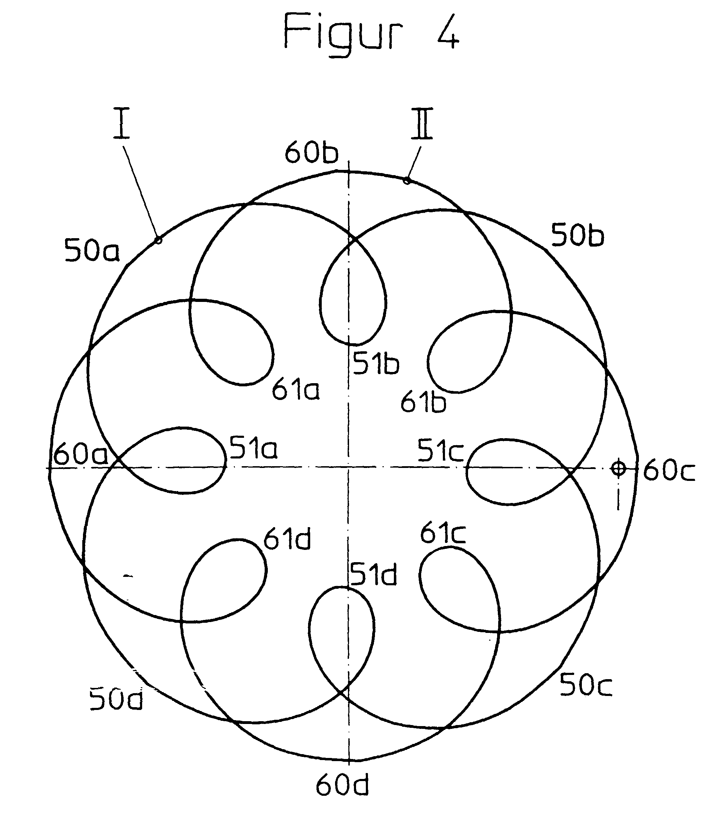

In der Figur 4 sind zwei Bewegungskurven I und II dargestellt. Es handelt sich in beiden Fällen um jeweils eine geschlossene Epizykloide mit vier Scheitelpunkten 50a-d und vier Umkehrpunkten 51a-d, weil das Verhältnis der Zähne von Stellscheibe und Messerscheibe 4:1 beträgt. Um von der Kurve I zur Kurve II überzugehen, muß eine Verdrehung der Epizykloide um 45° vorgenommen werden, damit in den jeweiligen Umkehrpunkten der Kurve I die Scheitelpunkte 60a-d der Kurve II liegen. Dementsprechend befinden sich die Rückkehrpunkte 61a-d der Kurve II im Bereich der Scheitelpunkte 50a-d der Kurve I.

### Bezugszeichenliste

- 2: Rahmen
- 4: Profilführungseinrichtung
- 6: Profil
- 8: Messerscheibe
- 10: Schneidmesser
- 12: Trägerscheibe
- 13: Antriebsscheibe
- 14: Zahnriemen
- 16: Umlenkscheibe
- 18: Stellscheibe
- 19: Achse
- 20: Welle
- 22: Verstelleinrichtung
- 23: Verdrehantrieb
- 24: Stellzylinder
- 25: Platte
- 26: Stellplatte
- 27: Gelenkpunkt
- 28: Gelenkpunkt
- 30: Puffer
- 32: Winkeleisen
- 34: Stellschraube
- 40: Antriebseinrichtung
- 42: Antriebsriemen
- 50a-d: Scheitelpunkte
- 51a-d: Umkehrpunkte
- 60a-d: Scheitelpunkte
- 61a-d: Umkehrpunkte
- 70: Stoßdämpfer

## Patentansprüche

1. Vorrichtung zum Ablängen oder Schlitzen von kontinuierlich bewegtem, strangförmigem Material (6) mit mindestens einem Schneidmesser (10), das an einem rotierenden, exzentrisch auf einem Trägerelement (12) angeordneten Messerhalter (8) derart nach außen vorstehend befestigt ist, daß das Schneidmesser (10) während einer Umdrehung des Trägerelementes (12) eine Epizykloide beschreibt, wobei das Trägerelement (12) von einer Antriebseinrichtung (40) angetrieben ist, und die Rotationsachse parallel zur Längsrichtung des strangförmigen Materials (6) angeordnet ist, dadurch gekennzeichnet,
daß der Messerhalter (8) und das Trägerelement (12) jeweils runde Scheiben sind,
daß an der Messerscheibe (8) eine Verstelleinrichtung (22) zum Verdrehen der Epizykloide angreift, die eine benachbart und koaxial zur Trägerscheibe (12) angeordnete Stellscheibe (18) umfaßt, um die die Messerscheibe (8) umläuft, wobei die Stellscheibe (18) mittels einer an ihr angreifenden Verdreheinrichtung (22) um ihre Achse (19) zwischen zwei Ruhepositionen schwenkbar ist,
daß die Messerscheibe (8) und die Stellscheibe (18) als Zahnriemenscheiben ausgebildet sind,
daß beabstandet zur Messerscheibe (8) eine Umlenkscheibe (16) drehbar auf der Trägerscheibe (12) angeordnet ist und
daß die Messerscheibe (8) und die Umlenkscheibe (16) von einem Zahnriemen (14) umschlungen sind, der im Bereich zwischen Messerscheibe (8) und Umlenkscheibe (16) an der Stellscheibe (18) anliegt.

2. Vorrichtung nach Anspruch 1, dadurch gekennzeichnet, daß der Durchmesser der Trägerscheibe (12) ≥ dem Durchmesser der Messerscheibe (8) ist.

3. Vorrichtung nach einem der Ansprüche 1 oder 2, dadurch gekennzeichnet, daß die Stellscheibe (18) um einen Winkel von 45° schwenkbar ist.

4. Vorrichtung nach einem der Ansprüche 1 bis 3, dadurch gekennzeichnet, daß das Verhältnis der Zähnezahl der Stellscheibe (18) zur Zähnezahl der Messerscheibe (8) ganzzahlig ist.

5. Vorrichtung nach Anspruch 4, dadurch gekennzeichnet, daß das Verhältnis der Zähnezahl der Stellscheibe (18) zur Zähnezahl der Messerscheibe (8) zwischen 2:1 und 10:1 liegt.

## Claims

1. A device for cutting to length or slitting a continuously moving strand-form material (6) with at least one cutting blade (10) which is attached to a rotating blade holder (8) eccentrically disposed on a carrier element (12) so that it projects outwards, the cutting blade (10) describing an epicycloid during one revolution of the carrier element (12), wherein the carrier element (12) is driven by a driving device (40), and the rotational axis is parallel to the longitudinal direction of the strand-form material (6), characterised in that
the blade holder (8) and the carrier element (12) are both round discs,
to turn the epicycloid the cutting disc (8) is acted on by a shifting device (22) comprising a positioning disc (18) which is adjacent to and coaxial with the carrier disc (12) and around which the cutting disc (8) rotates, wherein the positioning disc (18) is turnable about its axis (19) between two idle positions by the action of its turning device (22),
the cutting disc (8) and the positioning disc (18) are designed as toothed belt discs,
at a distance from the cutting disc (8) a deflection disc (16) rotatable on the carrier disc (12) is provided and
a toothed belt (14) embraces the cutting disc (8) and the deflection disc (16) and rests against the positioning disc (18) in the region between the cutting disc (8) and the deflection disc (16).

2. Device according to claim 1, characterised in that the diameter of the carrier disc (12) is ≥ the diameter of the cutting disc (8).

3. Device according to one of claims 1 or 2, characterised in that the positioning disc (18) is turnable through an angle of 45°.

4. Device according to one of claims 1 to 3, characterised in that the ratio of the number of teeth of the positioning disc (18) to the number of teeth of the cutting disc (8) is an integer.

5. Device according to claim 4, characterised in that the ratio of the number of teeth of the positioning disc (18) to the number of teeth of the cutting disc (8) is between 2:1 and 10:1.

## Revendications

1. Dispositif pour mettre à la longueur ou fendre un matériau (6) en forme allongée déplacé en continu, comportant au moins une lame de coupe (10) qui est fixée sur un porte-lame (8) rotatif disposé de manière excentrée sur un élément de support (12), en faisant saillie vers l'extérieur de telle sorte que la lame de coupe (10) décrit une épicycloïde pendant une rotation de l'élément de support (12), l'élément de support (12) étant entraîné par un dispositif d'entraînement (40) et l'axe de rotation étant disposé parallèlement à la direction longitudinale du matériau (6) en forme allongée, caractérisé en ce
que le porte-lame (8) et l'élément de support (12) sont respectivement des disques ronds,
qu'un dispositif de réglage (22) destiné à tordre l'épicycloïde agit sur le disque porte-lame (8), lequel dispositif de réglage comprend un disque de réglage (18) qui est disposé au voisinage du disque de support (12) et coaxialement avec celui-ci et autour duquel tourne le disque porte-lame (8), le disque de réglage (18) pouvant pivoter autour de son axe (19) entre deux positions de repos, au moyen d'un dispositif de rotation (22) agissant sur lui,
que le disque porte-lame (8) et le disque de réglage (18) sont réalisés sous forme de disques pour courroie dentée,
qu'un disque de déviation (16) est disposé tournant sur le disque de support (12), à distance du disque porte-lame (8), et
que le disque porte-lame (8) et le disque de déviation (16) sont entourés par une courroie dentée (14) qui repose sur le disque de réglage (18), dans la zone située entre le disque porte-lame (8) et le disque de déviation (16).

2. Dispositif selon la revendication 1, caractérisé en ce que le diamètre du disque de support (12) est ≥ au diamètre du disque porte-lame (8).

3. Dispositif selon une des revendications 1 ou 2, caractérisé en ce que le disque de réglage (18) peut pivoter d'un angle de 45°.

4. Dispositif selon une des revendications 1 à 3, caractérisé en ce que le rapport du nombre de dents du disque de réglage (18) au nombre de dents du disque porte-lame (8) est un nombre entier.

5. Dispositif selon la revendication 4, caractérisé en ce que le rapport du nombre de dents du disque de réglage (18) au nombre de dents du disque porte-lame (8) est compris entre 2:1 et 10:1.
